# EUROPEAN PATENT SPECIFICATION

(11) **EP 2 750 363 B1**
(45) Date of publication and mention of the grant of the patent: **31.10.2018**
(21) Application number: 13199762.9
(22) Date of filing: 30.12.2013
(51) Int. Cl.: H04M 1/725, G06F 3/01, G06F 3/16

(54) **Mobile terminal**
Mobiles Endgerät
Terminal mobile

(30) Priority: 31.12.2012 KR 20120158139
(43) Date of publication of application: 02.07.2014
(73) Proprietor: LG ELECTRONICS INC., Yeongdeungpo-Gu 07336 SEOUL (KR)
(72) Inventor: Kim, Dongik, 137-130 Seoul (KR); Hwang, Jeonghwan, 137-130 Seoul (KR); KIM, Namyoung, 137-130 Seoul (KR)
(74) Representative: Cabinet Plasseraud

(56) References cited:
- EP-A1- 2 182 452
- EP-A2- 2 525 271
- WO-A2-2012/162060
- US-A1- 2009 315 869

## Description

### [TECHNICAL FIELD]

The present invention concerns mobile terminals, and more specifically, to mobile terminals that may execute a specific function based on a user's command and may vary the form in which a result of the execution of the specific function is displayed according to a use state and/or the user's recognition condition.

### [BACKGROUND ART]

As mobile terminals such as laptop computers or smart phones happen to have a diversity of functions, the mobile terminals are turning into multimedia layers that may perform multiple functions including picture or video capturing, playback of music or video files, gaming, and broadcast reception.

In order to back up such functions or add more functions, developing the architectural and/or software part of the terminal may be considered. Recently, as mobile terminals or other terminals provide more functions, their menus may be complicated accordingly. WO2012/162060 discloses devices which are configured to alter their behaviour dependent on whether a user is gazing at the device.

### [SUMMARY]

### [OBJECTS OF INVENTION]

An object of the present invention is to provide a mobile terminal that, when executing a function corresponding to a user's command received, may vary the form in which a result of the execution of the function is displayed, considering the terminal's operating state or user's condition.

The objects to be achieved by the present invention are not limited to the foregoing, and other objects may be apparent to those skilled in the art from the following detailed description of the present invention.

### [MEANS TO ACHIEVE THE OBJECTS]

To achieve the above objects, according to an embodiment of the present invention, a mobile terminal according to claim 1 is provided.

To achieve the above objects, according to further embodiments of the present invention, a method according to claim 6, a computer program according to claim 7 and a computer readable medium according to claim 8 are provided.
Further advantageous details are defined in the dependent claims.
The embodiments and/or examples of the following detailed description, which do not fall under the scope of protection of the appended set of claims are considered as not being part of the present invention.

### [EFFECTS OF INVENTION]

A mobile terminal according to the present invention may vary the form in which a result of executing a function corresponding to a user's command received is displayed, considering the terminal's operation state or user's condition.

### [BRIEF DESCRIPTION OF DRAWNGS]

Fig. 1 is a block diagram illustrating a mobile terminal according to the present invention.
Fig. 2 is a flowchart illustrating an example method of driving a mobile terminal according to the present invention.
Fig. 3 is a flowchart illustrating another example method of driving a mobile terminal according to the present invention.
Figs. 4 to 10 illustrate examples in which a result of execution of a function corresponding to a user's command is displayed on a mobile terminal.
Fig. 11 is a flowchart illustrating another example method of driving a mobile terminal according to the present invention.
Figs. 12 and 13 illustrate examples in which the position or area where a result of execution of a function corresponding to a user's command is displayed is varied by the method of driving a mobile terminal as illustrated in Fig. 11.
Fig. 14 is a flowchart illustrating another example method of driving a mobile terminal according to the present invention.
Fig. 15 illustrates an example in which the display state of the screen of a mobile terminal is controlled by the method of driving a mobile terminal as illustrated in Fig. 14.
Fig. 16 is a flowchart illustrating another example method of driving a mobile terminal according to the present invention.
Fig. 17 illustrates an example in which the display state of the screen of a mobile terminal is controlled by the method of driving a mobile terminal as illustrated in Fig. 16.
Fig. 18 is a flowchart illustrating another example method of driving a mobile terminal according to the present invention.
Fig. 19 illustrates an example in which the display state of the screen of a mobile terminal is controlled by the method of driving a mobile terminal as illustrated in Fig. 18.

### [DETAILED DESCRIPTION]

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

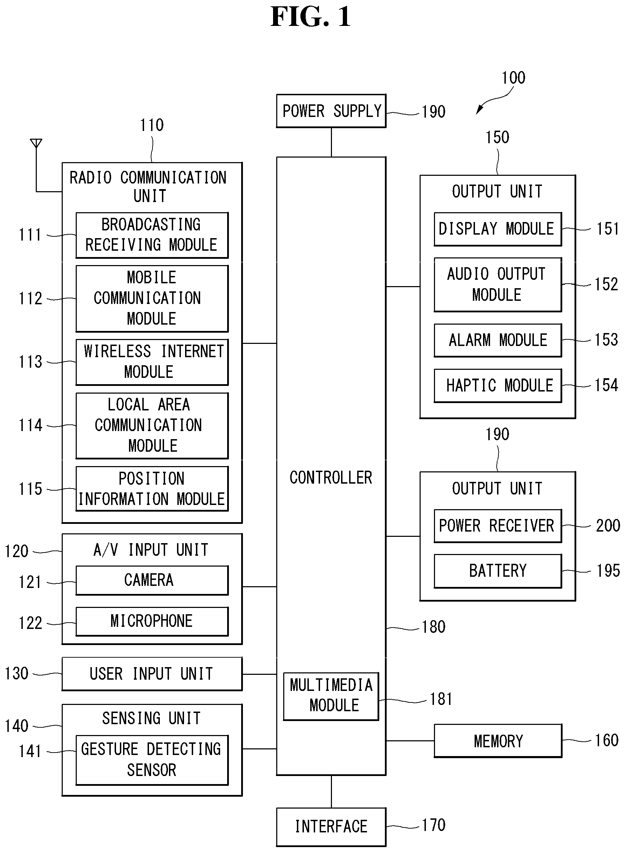

FIG. 1 is a block diagram of a mobile terminal 100 in accordance with an embodiment of the present invention. The mobile terminal 100 can include a radio communication unit 110, an audio/video (A/V) input unit 120, a user input unit 130, a sensing unit 140, an output unit 150, memory 160, an interface 170, a controller 180, and a power supply 190. The components shown in FIG. 1 are not essential parts and the number of components included in the mobile terminal can be varied.

The components of the mobile terminal will now be described.

The radio communication unit 110 can include at least one module that enables radio communication between the mobile terminal 100 and a radio communication system or between the mobile terminal 100 and a network in which the mobile terminal 100 is located. For example, the radio communication unit 110 can include a broadcasting receiving module 111, a mobile communication module 112, a wireless Internet module 113, a local area communication module 114 and a position information module 115.

The broadcasting receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

The broadcasting related information can be information on a broadcasting channel, a broadcasting program or a broadcasting service provider. The broadcasting related information can be provided even through a mobile communication network. In this case, the broadcasting related information can be received by the mobile communication module 112.

The broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcasting receiving module 111 receives broadcasting signals using various broadcasting systems. Particularly, the broadcasting receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcasting receiving module 111 can be constructed to be suited to broadcasting systems providing broadcasting signals other than the above-described digital broadcasting systems.

The broadcasting signals and/or broadcasting related information received through the broadcasting receiving module 111 can be stored in the memory 160. The mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 means a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The local area communication module 114 means a module for local area communication. Bluetooth, radio frequency identification (RFID), infrared data association (IrDA), ultra wideband (UWB) and ZigBee can be used as a local area communication technique.

The position information module 115 confirms or obtains the position of the mobile terminal. A global positioning system (GPS) module is a representative example of the position information module 115. According to the current technology, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time.

Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display module 151.

The image frames processed by the camera 121 can be stored in the memory 160 or transmitted to an external device through the radio communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when the external audio signal is received.

The user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone. And the sensing unit 140 can sense a change of the position of the mobile terminal 100, a movement of the mobile terminal or a gesture of the user using a gesture detecting sensor 141. Furthermore, the sensing unit 140 can sense whether the power supply 190 supplies power and whether the interface 170 is connected to an external device. The sensing unit 140 can include a proximity sensor.

The output unit 150 generates visual, auditory or tactile output and can include the display module 151, an audio output module 152, an alarm module 153 and a haptic module 154.

The display module 151 displays information processed by the mobile terminal 100. For example, the display module 151 displays UI or graphic user interface (GUI) related to a telephone call when the mobile terminal is in the call mode. The display module 151 displays a captured or/and received image, UI or GUI when the mobile terminal 100 is in the video telephony mode or the photographing mode.

The display module 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display module 151 can also be of the light transmission type. According to this structure, a user can see an object located behind the body of the mobile terminal 100 through an area of the body of the mobile terminal 100, which is occupied by the display module 151.

The mobile terminal 100 can include at least two display modules 151 according to constitution of the terminal. For example, the mobile terminal 100 can include a plurality of displays that are arranged on a single face at a predetermined distance or integrated. Otherwise, the plurality of displays can be arranged on different sides.

In the case where the display module 151 and a sensor sensing touch (referred to as a touch sensor hereinafter) form a layered structure, which is referred to as a touch screen hereinafter, the display module 151 can be used as an input device in addition to an output device. The touch sensor can be in the form of a touch film, a touch sheet and a touch pad, for example.

The touch sensor can be constructed such that it converts a variation in pressure applied to a specific portion of the display module 151 or a variation in capacitance generated at a specific portion of the display module 151 into an electric input signal. The touch sensor can be constructed such that it can sense pressure of touch as well as the position and area of touch.

When touch input is applied to the touch sensor, a signal corresponding to the touch input is transmitted to a touch controller. The touch controller processes the signal and transmits data corresponding to the processed signal to the controller 180. Accordingly, the controller 180 can detect a touched portion of the display 151.

The touch sensor may be implemented using proximity sensor located in an internal region of the mobile terminal, surrounded by the touch screen, or near the touch screen. The proximity sensor senses an object approaching a predetermined sensing face or an object located near the proximity sensor using electromagnetic force or infrared rays without having mechanical contact. The proximity sensor has lifetime longer than that of a contact sensor and has wide application.

The proximity sensor includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

A capacitive touch screen is constructed such that proximity of a pointer is detected through a variation in an electric field according to the proximity of the pointer. In this case, the touch screen (touch sensor) can be classified as a proximity sensor.

For convenience of explanation, an action of approaching the pointer to the touch screen while the pointer it not being in contact with the touch screen such that location of the pointer on the touch screen is recognized is referred to as "proximity touch" and an action of bring the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

The proximity sensor senses proximity touch and a proximity touch pattern (for example, a proximity touch distance, a proximity touch direction, a proximity touch velocity, a proximity touch time, a proximity touch position, and a proximity touch moving state). Information corresponding to the sensed proximity touch action and proximity touch pattern can be displayed on the touch screen.

The audio output module 152 can output audio data received from the radio communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) that are performed in the mobile terminal 100. The audio output module 152 can include a receiver, a speaker, a buzzer, etc.

The alarm module 153 outputs a signal for indicating generation of an event of the mobile terminal 100. Examples of events generated in the mobile terminal include receiving of a call signal, receiving of a message, input of a key signal, input of touch, etc. The alarm module 153 can output signals in forms different from video signals or audio signals, for example, a signal for indicating generation of an event through vibration. The video signals or the audio signals can be also output through the display module 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to a constitution of the mobile terminal.

The memory 160 can store a program for the operation of the controller 180 and temporarily store input/output data (for example, phone book, messages, still images, and moving images). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

The interface 170 serves as a path to all external devices connected to the mobile terminal 100. The interface 170 receives data from the external devices or power and transmits the data or power to the internal components of the mobile terminal 100 or transmits data of the mobile terminal 100 to the external devices.

The interface 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a card slot included in the interface 170.

The controller 180 controls the overall operation of the mobile terminal. For example, the controller 180 performs control and processing for voice communication, data communication and video telephony. The controller 180 can include a multimedia module 181 for playing multimedia. The multimedia module 181 can be included in the controller 180 or separated from the controller 180.

The controller 180 can perform a pattern recognition process capable of recognizing handwriting input or picture-drawing input applied to the touch screen as characters or images.

The power supply 190 receives external power and internal power and provides power required for the operations of the components of the mobile terminal under the control of the controller 180.

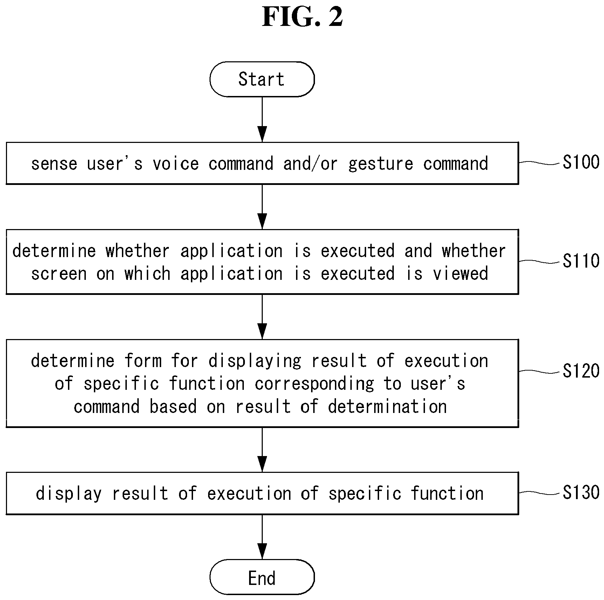

Fig. 2 is a flowchart illustrating an example method of driving a mobile terminal according to the present invention. Hereinafter, the driving method is described with reference to necessary drawings.

A user's voice command and/or gesture command is sensed by a sensing means (S100). For example, the user's voice command may be sensed by the microphone 122, and the user's gesture command may be sensed by the camera 121. Meanwhile, the user's command applied to the method of driving a mobile terminal as illustrated in Fig. 2 is not limited to the user's voice command or gesture command.

The controller 180 then determines whether an application is currently being executed in the mobile terminal 100, and if there is an application in execution, whether a user views the screen on which the application in execution is being executed (S110). Then, the controller 180 determines a form in which a result of the execution of a specific function corresponding to the user's command is displayed, based on a result of the determination (S120).

Thereafter, the controller 180 executes the specific function and displays a result of the execution on the display unit 151 (S130). Here, the specific function corresponding to the user's command may include execution of a specific application, the terminal's answer to the user's inquiry per a result of the voice recognition, and a change in operation state of the terminal. However, examples are not limited thereto.

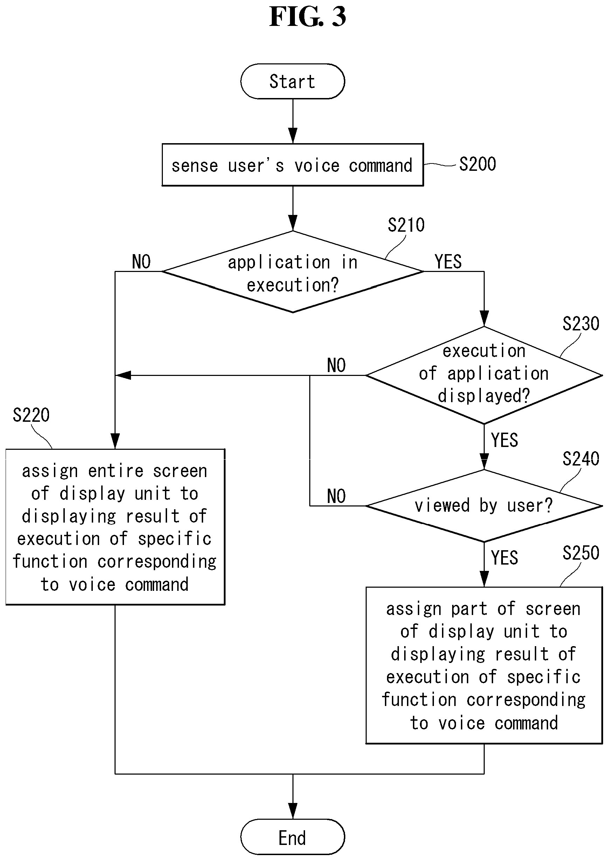

Fig. 3 is a flowchart illustrating another example method of driving a mobile terminal according to the present invention. Hereinafter, the driving method is described with reference to necessary drawings.

A user's voice command is sensed through the microphone 122 (S200). Then, the controller 180 determines whether an application is in execution (S210). If there is no application in execution, the controller 180 assigns the whole screen of the display unit 151 to displaying a result of the execution of a specific function corresponding to the voice command (S220).

Examples in which there is no application in execution may include when power supply to the display unit 151 is completely shut off, a wait-screen state, or a lock screen state. However, the present invention is not limited thereto.

However, if there is an application currently in execution, the controller 180 determines whether an image of the execution of the application is displayed on the display unit 151 (S230). If the execution of the application is not displayed on the display unit 151, the controller 180 assigns the entire screen of the display unit 151 to displaying a result of the execution of a specific function corresponding to the voice command (S220).

In case the execution of the application is not displayed on the display unit 151, it includes when the application is being executed as background and when the application is being executed but the display unit 151 remains turned off. However, the present invention is not limited thereto.

In case the execution of the application is displayed on the display unit 151, the controller 180 determines whether the user views the screen (S240). For example, the controller 180 may determine whether the user views the screen by analyzing an image captured through the camera 121. However, methods of the mobile terminal 100 determining whether the user views the screen are not limited thereto.

If the user is not viewing the screen, the controller 180 assigns the entire screen of the display unit 151 to displaying a result of the execution of a specific function corresponding to the voice command (S220), because although the execution is being displayed on the display unit 151, the user is highly likely not to be interested in the screen. However, in case the user is viewing the screen, the controller 180 assigns a portion of the screen of the display unit 151 to displaying a result of the execution of a specific function corresponding to the voice command (S250). For example, the area in which the result of the execution of the specific function may be displayed, overlapping a portion of the screen. Further, the controller 180 may assign a portion of the screen of the display unit 151 to the execution, while assigning another portion of the screen of the display unit 151 to the area in which the result of the execution of the specific function is displayed.

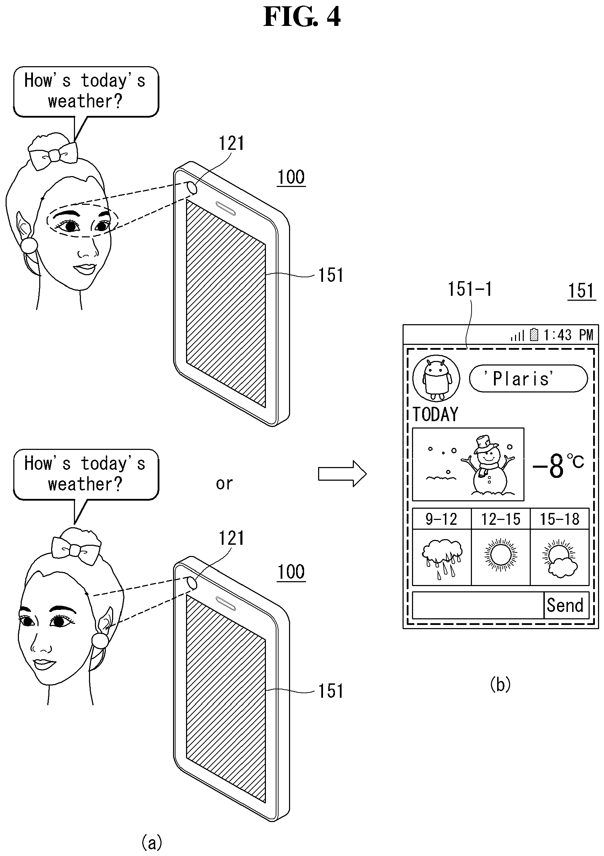

Hereinafter, referring to Figs. 4 to 10, various types of the area in which the result of the execution of the specific function are described.

Figs. 4 to 10 illustrate examples in which a result of execution of a function corresponding to a user's command is displayed on a mobile terminal.

Fig. 4(a) illustrates an example in which when the display unit 151 powers off, a user issues a voice command inquiring about today's weather, while viewing or not the display unit 151.

Meanwhile, the controller 180 may determine whether the user views the display unit 151 by analyzing an image captured by the camera 121. This is true for the examples to be seen thereafter. However, methods of the controller 180 determining whether the user views the display unit 151 are not limited thereto.

Then, the controller 180 may assign the entire screen of the display unit 151 to a display area 151-1 for an answer (i.e., weather information) to the inquiry regardless of whether the user views the display unit 151.

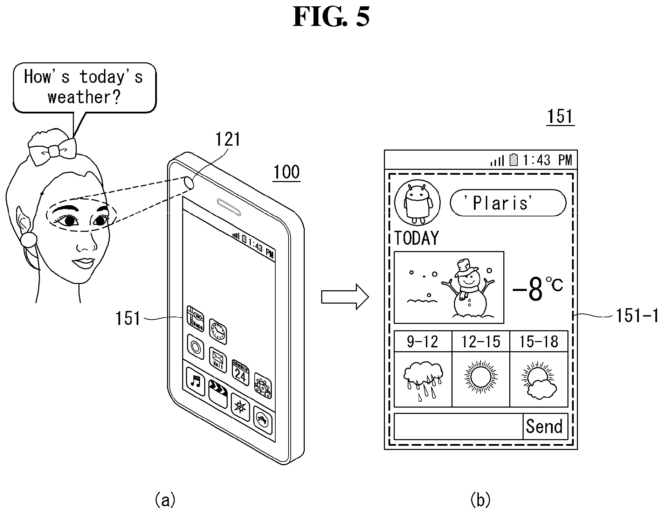

Fig. 5(a) illustrates an example in which in a waiting state, the user issues a voice command inquiring about today's weather, viewing the display unit 151. Upon sensing the voice command, the controller 180 may assign the entire screen of the display unit 151 to a display area 151-1 of an answer to the inquiry, as shown in Fig. 5(b).

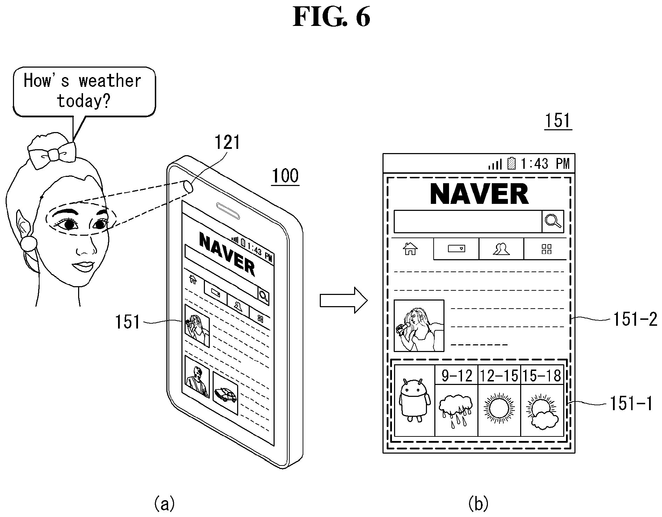

Fig. 6(a) illustrates an example in which, with execution of a web browsing application displayed on the display unit 151, the user issues a voice command inquiring about today's weather, viewing the display unit 151. When sensing the voice command, the controller 180 may assign a portion of the screen of the display unit 151 to a display area 151-1 for an answer to the inquiry. More specifically, in such case, the controller 180 may display the display area 151-1 for the answer, with the display area 151-1 overlapping a portion of the screen 151-2 on which the web browsing application is being executed.

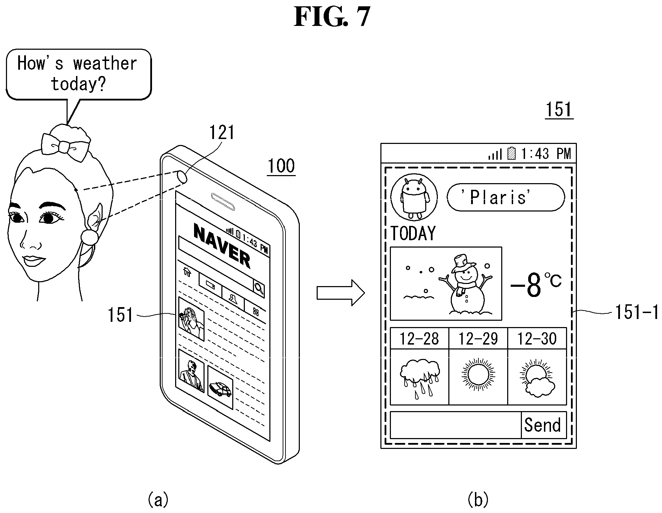

Fig. 7(a) illustrates an example in which, with execution of a web browsing application displayed on the display unit 151, a user issues a voice command inquiring about today's weather, not viewing the display unit 151. When detecting the voice command, the controller 180 may assign the entire screen of the display unit 151 to a display area 151-1 for an answer to the inquiry, as shown in Fig. 7(b).

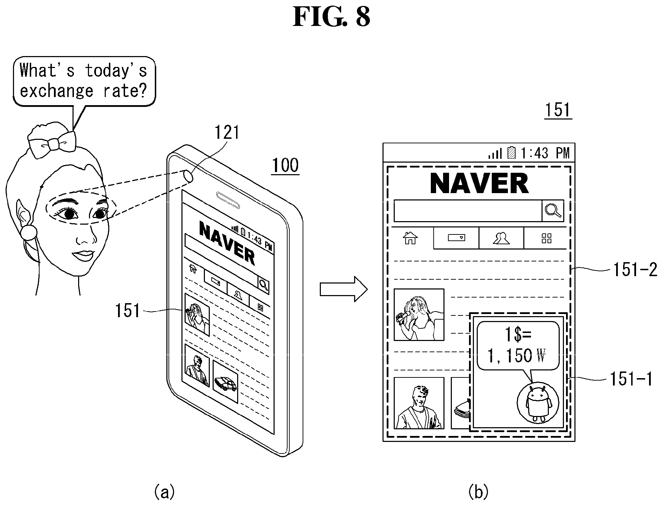

Fig. 8(a) illustrates an example in which, with execution of a web browsing application displayed on the display unit 151, a user issues a voice command inquiring about exchange rate, viewing the display unit 151. When sensing the voice command, the controller 180 may assign a portion of the screen of the display unit 151 to a display area 151-1 for an answer to the inquiry, as shown in Fig. 8(b). More specifically, in such case, the controller 180 may display the display area 151-1 for the answer in a floating form, with the display area 151-1 overlapping a portion of the screen 151-2 on which the web browsing application is being executed.

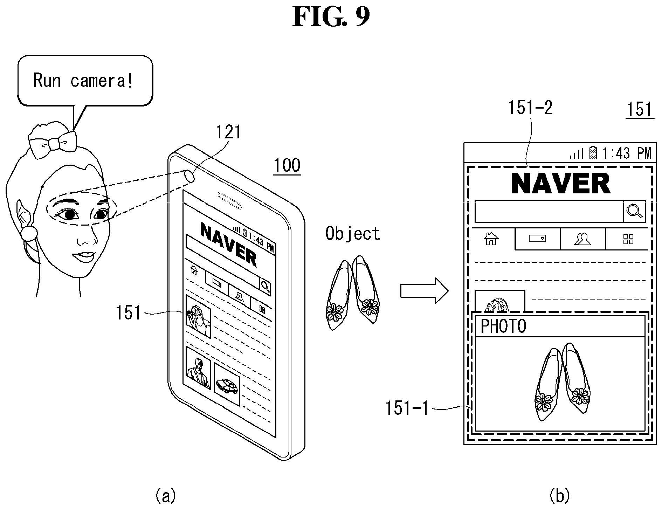

Fig. 9(a) illustrates an example in which, with execution of a web browsing application displayed on the display unit 151, a user issues a voice command for executing a camera application, viewing the display unit 151. When sensing the voice command, the controller 180 may assign a portion of the screen of the display unit 151 to the screen 151-1 on which the camera application is being executed, as shown in Fig. 9(b). More specifically, in such case, the controller 180 may display the screen 151-1 on which the camera application is being executed, with the screen 151-1 overlapping the screen 151-2 on which the web browsing application is being executed.

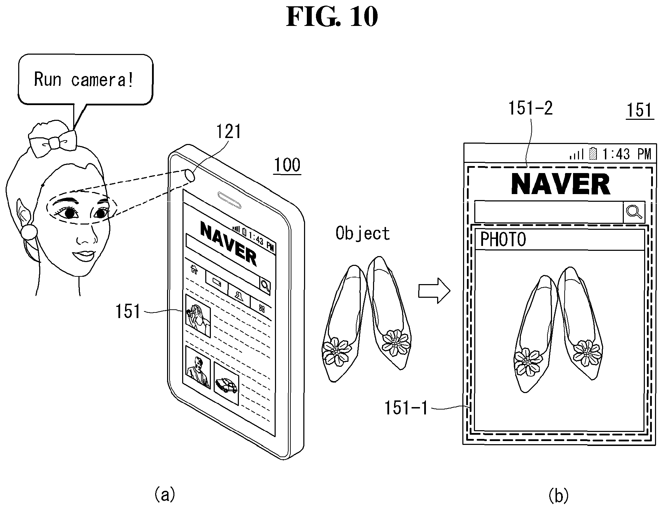

Fig. 10 illustrates an example in which when an object to be captured by the camera 121 is rendered larger than the object shown in Fig. 9, this is reflected so that the area of the screen 151-1 on which the camera application is executed is increased accordingly.

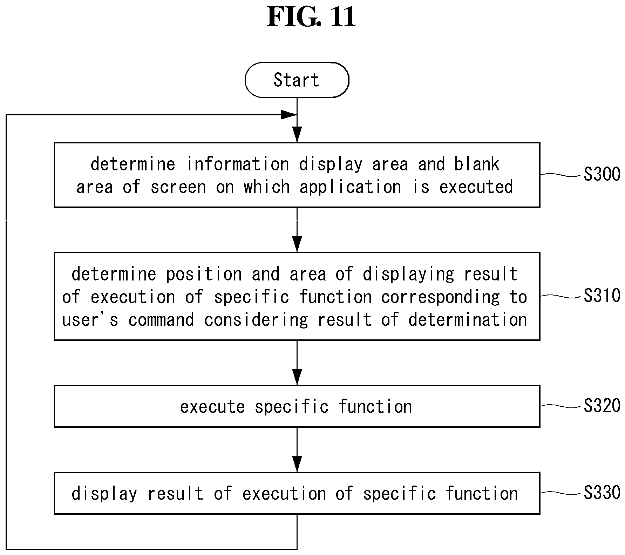

Fig. 11 is a flowchart illustrating another example method of driving a mobile terminal according to the present invention. Hereinafter, the driving method is described with reference to necessary drawings.

When receiving a user's command, the controller 180 determines an information display area and a blank area in the screen on which an application is in execution (S300). The controller 180 then determines the position and area of an area of displaying a result of the execution of a specific function corresponding to the user's command, in consideration of a result of the determination (S310).

Then, the controller 180 executes the specific function (S320) and displays the result of the execution of the specific function on the display unit 151 depending on the position and area determined (S330).

Meanwhile, "displaying on the display unit 151 an area of displaying a result of the execution of a specific function in consideration of a result of the determination" may mean displaying the result of the execution of the specific function while reducing interference in the function of providing information of the screen on which the application is being executed.

For example, the area of displaying the result of the execution of the specific function may be determined in its area and position to be displayed only on the blank area of the screen on which the application is being executed. Further, the area of displaying the result of the execution of the specific function may be determined in its area and position to minimize the overlap with the information displaying area of the screen on which the application is executed. However, the present invention is not limited thereto.

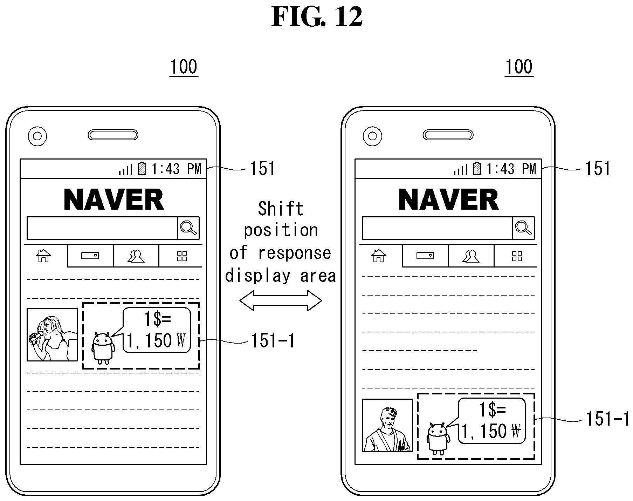

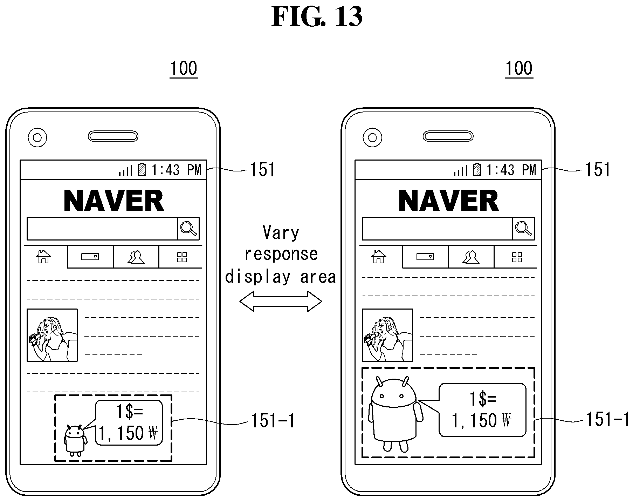

Figs. 12 and 13 illustrate examples in which the position or area where a result of execution of a function corresponding to a user's command is displayed is varied by the method of driving a mobile terminal as illustrated in Fig. 11.

Referring to Fig. 12, the position of an area 151-1 where an answer to a user's inquiry about exchange rate is displayed is changed from (a) to (b) or vice versa, according to the blank area of a web browsing application in execution. Referring to Fig. 13, the area 151-1 where an answer to a user's inquiry about exchange rate is displayed is changed from (a) to (b) or vice versa, according to the blank area of a web browsing application in execution.

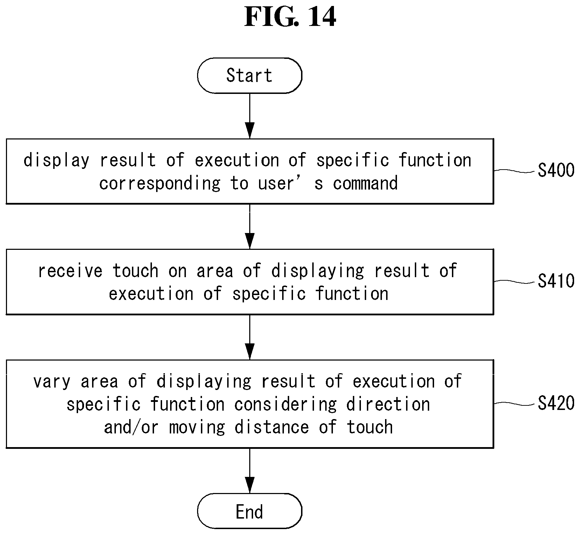

Fig. 14 is a flowchart illustrating another example method of driving a mobile terminal according to the present invention. Hereinafter, the driving method is described with reference to necessary drawings.

By the method described above, the controller 180 displays a result of execution of a specific function corresponding to a user's command (S400). Then, a touch to the area of displaying the result of the execution of the specific function is received (S410).

The controller 180 then varies the area of displaying the result of the execution of the specific function considering the direction and/or moving distance of the touch (S420). For example, when receiving a flicking for the display area in a specific direction, the controller 180 may expand the display area to the maximum size in the specific direction. As another example, when receiving a touch and drag on the display area, the controller 180 may expand or shrink the display area along the direction of the drag.

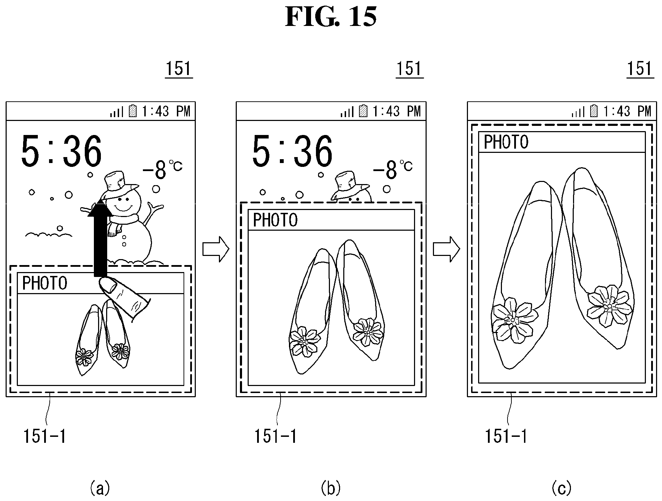

Fig. 15 illustrates an example in which the display state of the screen of a mobile terminal is controlled by the method of driving a mobile terminal as illustrated in Fig. 14.

Fig. 15(a) illustrates an example in which, while a camera application is executed based on a user's voice command and the screen 151-1 of the display unit 151 on which the execution is displayed, the user performs flicking on the screen 151-1. The controller 180 then may expand the screen 151-1 to the maximum size in the direction of the flicking, as shown in Fig. 15(b) and (c). In contrast, when receiving a flicking downward on the screen 151-1 through the screen 151-1 in the state shown in Fig. 15(c), the controller 180 may restore the screen 151-1 to the state shown in Fig. 15(a).

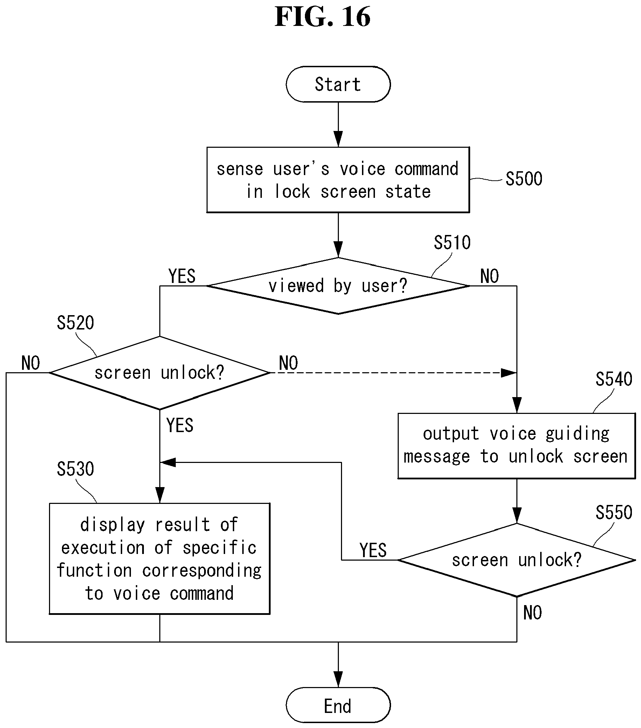

Fig. 16 is a flowchart illustrating another example method of driving a mobile terminal 100 according to the present invention. Hereinafter, the driving method is described with reference to necessary drawings.

A user's voice command is sensed through the microphone 122 in lock screen state (S500).

Then the controller 180 determines whether the user views the screen within a predetermined time interval after the sensing the voice command (S510).

For example, the controller 180 may determine whether the user views the screen by analyzing an image captured through the camera 121. However, methods of the mobile terminal 100 determining whether the user views the screen are not limited thereto.

If the user is viewing the screen of the display unit 151 within the predetermined time interval, the controller 180 determines whether the locked screen is unlocked within a predetermined time interval (S520). If the screen is unlocked within the predetermined time interval, the controller 180 displays a result of the execution of a specific function corresponding to the voice command (S530). An area where the result is displayed may be entire screen of the display unit 151 or a portion of the screen of the display unit 151.

If it is determined that the screen is not unlocked by the user within the predetermined time interval in the step S520, the controller 180 doesn't display the result of the execution of the specific function corresponding to the voice command.

However, in case the user is not viewing the screen of the display unit 151 within the predetermined time interval in the step S510, the controller 180 controls the speaker 152 to output a voice guiding message to unlock the screen of the display unit 151 (S540). For example, the guide message may be "It's a lock screen state. Unlock the screen." According to another embodiment, if it is determined that the screen is not unlocked within the predetermined time interval in the step S520, the controller 180 may perform the step S540.

After the guiding message has been output, the controller 180 determines whether the screen is unlocked by the user within a predetermined time interval (S550). If the screen is unlocked during the predetermined time interval, the controller 180 displays the result of the execution of the specific function corresponding to the voice command (S530).

However, in case the screen is not unlocked by the user during the predetermined time interval, the controller 180 doesn't display the result of the execution of the specific function corresponding to the voice command. If the user views the screen after the message has been output but the unlock operation is not performed by the user, the controller 180 may display the result of the execution of the specific function on the screen of the display unit 151 corresponding to the voice command.

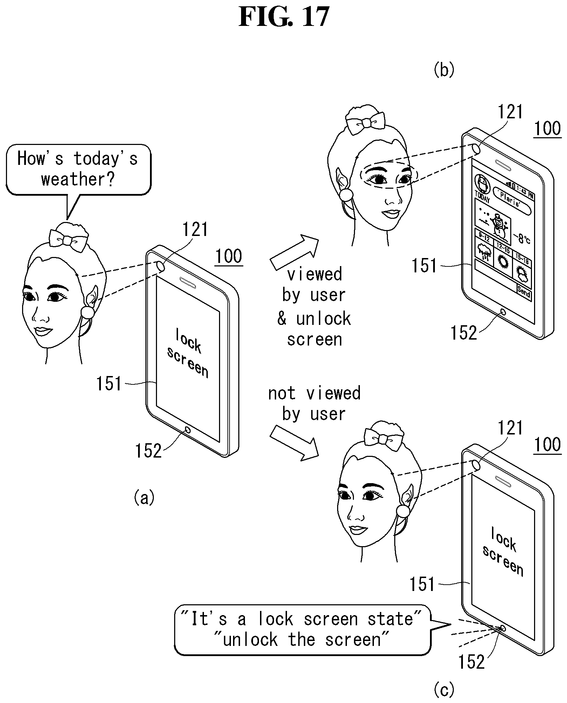

Fig. 17 illustrates an example in which the display state of the screen of a mobile terminal 100 is controlled by the method of driving a mobile terminal as illustrated in Fig. 16.

Fig. 17 (a) illustrates a user issues a voice command inquiring about today's weather when the user is not viewing the screen of the display unit 151 in the lock screen state.

Fig. 17 (b) illustrates a result of the voice command is displayed on the screen of the display unit 151 when the user views the screen of the display unit 151 and the locked screen is unlocked within a predetermined time interval after the voice command has been issued.

Fig. 17 (c) illustrates guiding messages "It's a lock screen state" and "unlock the screen" are output through a speaker 152 when the user doesn't view the screen of the display unit 151 within the predetermined time interval after the voice command has been issued.

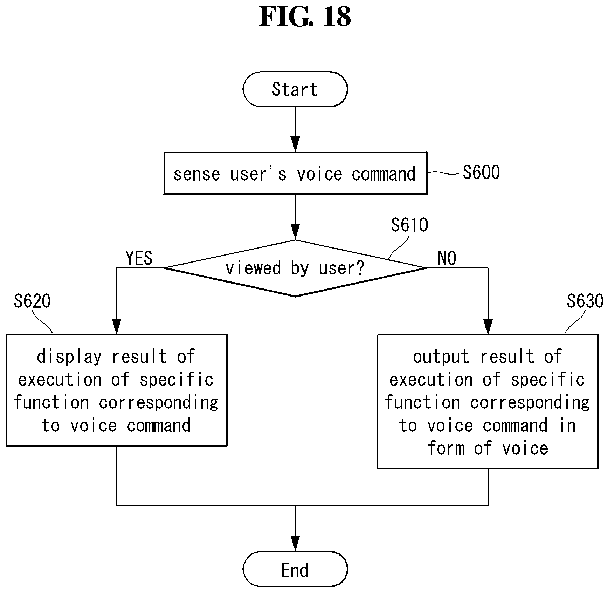

Fig. 18 is a flowchart illustrating another example method of driving a mobile terminal 100 according to the present invention. Hereinafter, the driving method is described with reference to necessary drawings.

A user's voice command is sensed through the microphone 122 in lock screen state (S600).

Herein the state of the mobile terminal 100 may be application execution state, cut off state of power supply to a display unit 151, a wait-screen state, or a lock screen state. However, the present invention is not limited thereto.

Then the controller 180 determines whether the user views the screen within a predetermined time interval after the sensing of the voice command (S610).

If the user is viewing the screen of the display unit 151 within the predetermined time interval, the controller 180 displays a result of the execution of a specific function corresponding to the voice command (S620).

However, in case the screen is not viewed by the user during the predetermined time interval, the controller 180 output the result of the execution of the specific function corresponding to the voice command in form of the voice through a speaker 152 (S630).

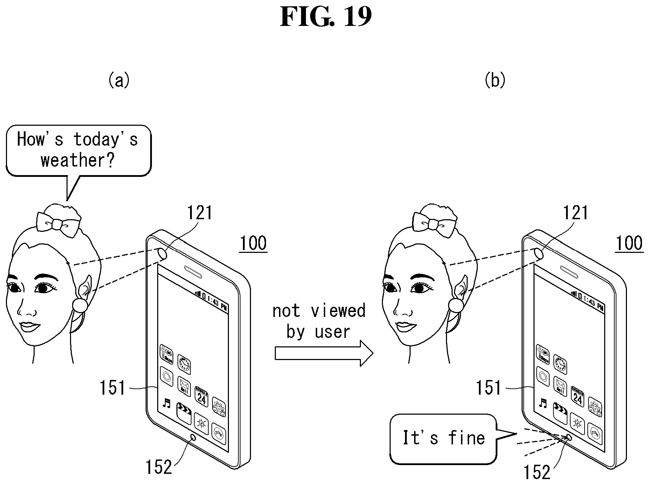

Fig. 19 illustrates an example in which the display state of the screen of a mobile terminal 100 is controlled by the method of driving a mobile terminal as illustrated in Fig. 18.

Fig. 19 (a) illustrates a user issues a voice command inquiring about today's weather when the user is not viewing the screen of the display unit 151 in the wait-screen state.

Fig. 19 (b) illustrates the controller 180 outputs the result of the execution of the specific function corresponding the voice command "It's fine." through a speaker 152 when the user doesn't view the screen of the display unit within the predetermined time interval after the voice command has been issued.

Each of the methods of driving a mobile terminal according to the present invention, as described above, may be implemented in a program that may be executed by various computing means and may be recorded in a computer readable medium. The computer readable medium may include, alone or in combination, a program command, a data file, and/or data architecture. The program recorded in the medium may be specially designed or configured for the present invention or may be known to those of ordinary skill in the computer software art.

The computer readable recording medium may include, for example, magnetic media, such as hard disks, floppy disks, and magnetic tapes, optical recording media, such as CD-ROMs and DVDs, magneto-optical media such as floptical disks, ROMs, RAMs, flash memories, and other hardware devices specially configured to store and execute program commands. The program may include, for example, machine language codes created by a compiler, as well as high level language codes that may be executed by a computer using an interpreter. The hardware devices may be configured in one or more software modules for performing the operation according to the present invention, and vice versa.

Although embodiments of the present invention have been described, it will be understood by those of ordinary skill in the art that various changes in form and detail may be made thereto without departing from the scope of the present invention defined by the following claims.

### [DESCRIPTION OF KEY ELEMENTS]

| | |
|---|---|
| 100: mobile terminal | |
| 110: wireless communication unit | |
| 116: input unit | |
| 120: A/V input unit | |
| 121: camera | 122: microphone |
| 130: user input unit | 140: sensing unit |
| 150: output unit | 151: display unit |
| 152: sound output unit | 160: memory |
| 170: interface unit | 180: controller |
| 190: power supply unit | |

## Claims

1. A mobile terminal (100), comprising:
a display unit (151);
a camera (121);
at least one sensing unit (140) for sensing a user's voice and/or gesture command; and
a controller (180) configured to:
execute an application and a specific function corresponding to a user command sensed by the sensing unit (140),
display a result of the execution of the specific function on the display unit (151),
detect a gaze of a user by analyzing an image captured through the camera (121), **characterised in that** the controller (180) is further configured to:
separate the display unit (151) into an area of the display unit on which the application is executed and an area for displaying the result of the execution of the specific function and, when the gaze is currently directing the display unit on which the application is executed,
display the result of the execution of the specific function on a blank area on the display unit on which the application is executed, wherein the blank area is an area excluding an information display area on the display unit on which the application is executed, and, when the gaze is not currently directing the display unit on which the application is executed,
display the result of the execution of the specific function on an entire area of the display unit (151).

2. The mobile terminal (100) of claim1, wherein the controller (180) is further configured to vary the position of the area for displaying the result of the execution of the specific function, considering the blank area and the information display area on the display unit on which the application is executed.

3. The mobile terminal (100) of claim 1, wherein the controller (180) is further configured to vary the area for displaying the result of the execution of the specific function, considering the blank area and the information display area on the display unit on which the application is executed.

4. The mobile terminal (100) of claim 1, wherein the controller (180), in a case where there is an application in execution when the user's command is received, but the display unit on which the application is executed is not displayed on the display unit (151), is further configured to assign the entire the display unit for displaying the result of the execution of the specific function.

5. The mobile terminal (100) of claim 1, wherein the controller (180) is further configured to execute the specific function based on a result of voice recognition of the user's voice command.

6. A method of operating a mobile terminal (100), the mobile terminal comprising:
a display unit (151);
a camera (121);
at least one sensing unit (140) sensing a user's voice and/or gesture command; and
a controller (180), the method comprising:
executing an application and a specific function corresponding to a user command sensed by the sensing unit (140),
**characterised by**
displaying a result of the execution of the specific function on the display unit (151),
detecting a gaze of a user by analyzing an image captured through the camera (121),
separating the display unit (151) into an area of the display unit on which the application is executed and an area for displaying the result of the execution of the specific function and, when the gaze is currently directing the display unit on which the application is executed,
displaying the result of the execution of the specific function on a blank area on the display unit on which the application is executed, wherein the blank area is an area excluding an information display area on the display unit on which the application is executed, and, when the gaze is not currently directing the display unit on which the application is executed,
displaying the result of the execution of the specific function on an entire area of the display unit (151).

7. A computer program product comprising computer readable code which, when executed on a processing system, is configured to perform all of the steps of the method of claim 6.

8. A computer readable medium comprising the computer program product of claim 7.

## Patentansprüche

1. Mobiles Endgerät (100) mit:
einer Anzeigevorrichtung (151),
einer Kamera (121),
mindestens einer Detektionsvorrichtung (140) zum Detektieren eines Sprach- oder
Gestenbefehls eines Nutzers und
einer Steuervorrichtung (180), die ausgebildet ist:
eine Anwendung und eine bestimmte Funktion gemäß eines durch die Detektionsvorrichtung (140) abgetasteten Nutzerbefehls auszuführen,
ein Ergebnis der Ausführung der bestimmten Funktion auf der Anzeigevorrichtung (151) anzuzeigen,
einen Blick eines Nutzers durch Analyse eines mit der Kamera (121) aufgenommenen Bildes zu erfassen,
**dadurch gekennzeichnet, dass** die Steuervorrichtung (180) ferner ausgebildet:
die Anzeigevorrichtung (151) in einen Bereich der Anzeigevorrichtung, in der die Anwendung ausgeführt wird, und in einen Bereich zur Anzeige des Ergebnisses der Ausführung der bestimmten Funktion zu teilen und,
wenn der Blick gerade auf die Anzeigevorrichtung gerichtet ist, auf der die Anwendung ausgeführt wird,
das Ergebnis der Ausführung der bestimmten Funktion in einem leeren Bereich auf der Anzeigevorrichtung, auf der die Anwendung ausgeführt wird, anzuzeigen, wobei der leere Bereich ein Bereich ist, der einen Informationsanzeigebereich auf der Anzeigevorrichtung, auf der die Anwendung ausgeführt wird, ausspart, und
wenn der Blick gerade nicht auf die Anzeigevorrichtung gerichtet ist, auf der die Anwendung ausgeführt wird,
das Ergebnis der Ausführung der bestimmten Funktion auf einem Gesamtbereich der Anzeigevorrichtung (151) anzuzeigen.

2. Mobiles Endgerät (100) nach Anspruch 1, wobei die Steuervorrichtung (180) ferner ausgebildet ist, die Position des Bereichs zur Anzeige des Ergebnisses der Ausführung der bestimmten Funktion zu variieren, unter Berücksichtigung des leeren Bereichs und des Informationsanzeigebereichs der Informationsanzeigevorrichtung, auf der die Anwendung ausgeführt wird.

3. Mobiles Endgerät (100) nach Anspruch 1, wobei die Steuervorrichtung (180) ferner ausgebildet ist, den Bereich zur Anzeige des Ergebnisses der Ausführung der bestimmten Funktion zu variieren, unter Berücksichtigung des leeren Bereichs und des Informationsanzeigebereichs der Informationsanzeigevorrichtung, auf der die Anwendung ausgeführt wird.

4. Mobiles Endgerät (100) nach Anspruch 1, wobei, wenn bei Empfang des Nutzerbefehls eine Anwendung ausgeführt wird, die Anzeigevorrichtung, auf der die Anwendung ausgeführt wird, jedoch nicht auf der Anzeigevorrichtung (151) angezeigt wird, die Steuervorrichtung (180) ferner ausgebildet ist, der gesamten Anzeigevorrichtung die Anzeige des Ergebnisses der Ausführung der bestimmten Funktion zuzuweisen.

5. Mobiles Endgerät (100) nach Anspruch 1, wobei die Steuervorrichtung (180) ferner ausgebildet ist, die bestimmte Funktion auf Basis eines Ergebnisses der Stimmerkennung des Nutzersprachbefehls auszuführen.

6. Verfahren zum Betrieb eines mobilen Endgeräts (100), wobei das mobile Endgerät aufweist:
eine Anzeigevorrichtung (151),
eine Kamera (121),
mindestens eine Detektionsvorrichtung (140) zum Detektieren eines Sprach- oder
Gestenbefehls eines Nutzers und
einer Steuervorrichtung (180), die ausgebildet ist:
eine Anwendung und eine bestimmte Funktion gemäß eines durch die Detektionsvorrichtung (140) abgetasteten Nutzerbefehls auszuführen, **gekennzeichnet durch** die Schritte
Anzeigen eines Ergebnisses der Ausführung der bestimmten Funktion auf der Anzeigevorrichtung (151),
Erfassen eines Blicks eines Nutzers durch Analyse eines mit der Kamera (121) aufgenommenen Bildes,
Teilen der Anzeigevorrichtung (151) in einen Bereich der Anzeigevorrichtung, in der die Anwendung ausgeführt wird, und in einen Bereich zur Anzeige des Ergebnisses der Ausführung der bestimmten Funktion und,
wenn der Blick gerade auf die Anzeigevorrichtung gerichtet ist, auf der die Anwendung ausgeführt wird,
Anzeigen des Ergebnisses der Ausführung der bestimmten Funktion in einem leeren Bereich auf der Anzeigevorrichtung, auf der die Anwendung ausgeführt wird, wobei der leere Bereich ein Bereich ist, der einen Informationsanzeigebereich auf der Anzeigevorrichtung, auf der die Anwendung ausgeführt wird, ausspart, und
wenn der Blick gerade nicht auf die Anzeigevorrichtung gerichtet ist, auf der die Anwendung ausgeführt wird,
Anzeigen des Ergebnisses der Ausführung der bestimmten Funktion auf einem Gesamtbereich der Anzeigevorrichtung (151).

7. Computerprogrammprodukt mit einem computerlesbaren Code, der, wenn er auf einem Verarbeitungssystem ausgeführt wird, ausgebildet ist, alle Schritte des Verfahrens nach Anspruch 6 auszuführen.

8. Computerlesbares Medium mit dem Computerprogrammprodukt nach Anspruch 7.

## Revendications

1. Terminal mobile (100), comprenant :
une unité d'affichage (151) ;
une caméra (121) ;
au moins une unité de détection (140) pour détecter la voix d'un utilisateur et/ou une commande gestuelle ; et
un contrôleur (180) configuré pour :
exécuter une application et une fonction spécifique correspondant à une commande d'utilisateur détectée par l'unité de détection (140),
afficher un résultat de l'exécution de la fonction spécifique sur l'unité d'affichage (151),
détecter un regard d'un utilisateur par une analyse d'une image capturée par le biais de la caméra (121),
**caractérisé en ce que** le contrôleur (180) est configuré en outre pour :
séparer l'unité d'affichage (151) en une zone de l'unité d'affichage sur laquelle l'application est exécutée et en une zone pour afficher le résultat de l'exécution de la fonction spécifique et,
lorsque le regard est actuellement dirigé vers l'unité d'affichage sur laquelle l'application est exécutée, afficher le résultat de l'exécution de la fonction spécifique sur une zone vide sur l'unité d'affichage sur laquelle l'application est exécutée, dans lequel la zone vide est une zone excluant une zone d'affichage d'informations sur l'unité d'affichage sur laquelle l'application est exécutée, et,
lorsque le regard n'est pas actuellement dirigé vers l'unité d'affichage sur laquelle l'application est exécutée, afficher le résultat de l'exécution de la fonction spécifique sur une zone entière de l'unité d'affichage (151).

2. Terminal mobile (100) selon la revendication 1, dans lequel le contrôleur (180) est configuré en outre pour varier la position de la zone pour afficher le résultat de l'exécution de la fonction spécifique, en prenant en considération la zone vide et la zone d'affichage d'informations sur l'unité d'affichage sur laquelle l'application est exécutée.

3. Terminal mobile (100) selon la revendication 1, dans lequel le contrôleur (180) est configuré en outre pour varier la zone pour afficher le résultat de l'exécution de la fonction spécifique, en prenant en considération la zone vide et la zone d'affichage d'informations sur l'unité d'affichage sur laquelle l'application est exécutée.

4. Terminal mobile (100) selon la revendication 1, dans lequel le contrôleur (180), dans un cas où il y a une application en cours d'exécution lorsque la commande de l'utilisateur est reçue, mais que l'unité d'affichage, sur laquelle l'application est exécutée, n'est pas affichée sur l'unité d'affichage (151), est configuré en outre pour attribuer toute l'unité d'affichage pour afficher le résultat de l'exécution de la fonction spécifique.

5. Terminal mobile (100) selon la revendication 1, dans lequel le contrôleur (180) est configuré en outre pour exécuter la fonction spécifique sur la base d'un résultat de reconnaissance vocale de la voix d'une commande de l'utilisateur.

6. Procédé de fonctionnement d'un terminal mobile (100), le terminal mobile comprenant :
une unité d'affichage (151) ;
une caméra (121) ;
au moins une unité de détection (140) détectant une voix d'un utilisateur et/ou une commande gestuelle ; et
un contrôleur (180), le procédé comprenant :
l'exécution d'une application et d'une fonction spécifique correspondant à une commande d'utilisateur détectée par l'unité de détection (140),
**caractérisé par**
l'affichage d'un résultat de l'exécution de la fonction spécifique sur l'unité d'affichage (151),
la détection d'un regard d'un utilisateur par une analyse d'une image capturée par le biais de la caméra (121),
la séparation de l'unité d'affichage (151) en une zone de l'unité d'affichage sur laquelle l'application est exécutée et en zone pour afficher le résultat de l'exécution de la fonction spécifique et,
lorsque le regard est actuellement dirigé vers l'unité d'affichage sur laquelle l'application est exécutée, l'affichage du résultat de l'exécution de la fonction spécifique sur une zone vide sur l'unité d'affichage sur laquelle l'application est exécutée, dans lequel la zone vide est une zone excluant une zone d'affichage d'informations sur l'unité d'affichage sur laquelle l'application est exécutée, et,
lorsque le regard n'est pas actuellement dirigé vers l'unité d'affichage sur laquelle l'application est exécutée, l'affichage du résultat de l'exécution de la fonction spécifique sur une zone entière de l'unité d'affichage (151).

7. Produit-programme d'ordinateur comprenant un code lisible par ordinateur qui, lorsqu'il est exécuté sur un système de traitement, est configuré pour réaliser toutes les étapes du procédé selon la revendication 6.

8. Support lisible par ordinateur comprenant le produit-programme d'ordinateur selon la revendication 7.
